# DEMANDE DE BREVET EUROPEEN

(11) **EP 3 967 285 A1**
(43) Date de publication de la demande: **16.03.2022**
(21) Numéro de dépôt: 20306021.5
(22) Date de dépôt: 14.09.2020
(51) Int. Cl.: A61G 5/04, A61G 5/10, A61G 3/08, G05D 1/00, G01C 21/00

(54) **APPAREILLAGE MOBILE POUR HANDICAPES MOTEURS ET SYSTEME DE GUIDAGE IMPLIQUANT UN TEL APPAREILLAGE**

(71) Demandeur: Tridon de Rey, Hubert, 75011 Paris (FR); Prévot, Corinne, 75011 Paris (FR); de Panafieu, Julien, 92300 Levallois-Perret (FR); Degeorges, Philippe, 59491 Villeneuve-D'Ascq (FR); Prévot, Eric, 77120 Coulommiers (FR)
(72) Inventeur: Tridon de Rey, Hubert, 75011 Paris (FR)
(74) Mandataire: Gauchet, Fabien Roland

(57) **Abrégé**

L'appareillage (1) comporte un dispositif de commande (20) coopérant avec des dispositifs de commande annexes qui, au moyen de programmes téléchargeables de préférence, lui permettent de s'adapter à exécuter différentes fonctionnalités telles que l'aide pour son transport dans un véhicule automobile (50) ou pour aider les personnes handicapées à effectuer des visites dans un musée tout en évitant des obstacles fixes ou mouvants.

Application : Aides aux personnes à mobilité réduite

## Description

La présente invention concerne un appareillage mobile destiné notamment aux handicapés moteurs, appareillage formé :
- d'un dispositif de locomotion pour se déplacer selon une trajectoire libre ou fixe,
- d'un dispositif de commande pour agir notamment sur le dispositif de locomotion,
- de dispositifs de captage prévus pour détecter des obstacles pouvant se présenter dans la trajectoire dudit appareillage.

L'invention concerne aussi un système de guidage impliquant un tel appareillage.

De tels appareillages, utilisables comme fauteuils roulants, sont décrits dans les documents de brevet chinois CN102339019 et CN108399473. Les appareils de ces documents cités, bien qu'apportant des fonctionnalités intéressantes pour des personnes à mobilité réduite, ont des applications plutôt restreintes.

Le but de l'invention est de proposer un appareillage du type déjà mentionné apte à apporter, notamment de l'assistance à des personnes handicapées dans différentes circonstances.

Pour cela un appareillage tel que décrit dans le préambule est remarquable en ce qu'il comporte des moyens de gestion pour exécuter différents programmes de fonctionnement agissant sur ledit dispositif de commande afin de réaliser un guidage approprié.

Dans le cadre de l'invention, d'importantes applications notamment peuvent être réalisées. Ainsi par un programme dédié, on peut établir un système de guidage, impliquant un appareillage du type mentionné dans le préambule, destiné à faciliter l'accès à un véhicule automobile pour charger l'appareillage dans ce véhicule. On peut aussi établir un système de guidage impliquant un appareillage pour un lieu animé tel qu'un musée. L'appareillage pourra alors se déplacer selon une trajectoire prédéterminée, en évitant tout obstacle fixe ou mouvant. La personne handicapée pourra aussi accepter un parcours libre.

La description suivante accompagnée des dessins ci-annexés, le tout donné à titre d'exemple non limitatif, fera bien comprendre comment l'invention peut être réalisée. Sur les dessins :
La figure 1 montre un système de guidage impliquant un appareillage conforme à l'invention prévu pour l'accessibilité de l'appareillage lorsqu'on utilise un véhicule automobile,
La figure 2 montre un premier exemple de réalisation d'un dispositif de commande convenant à l'appareillage conforme à l'invention,
La figure 3 montre un deuxième exemple de réalisation d'un dispositif de commande convenant à l'appareillage conforme à l'invention,
La figure 4 représente un système de guidage impliquant un appareillage conforme à l'invention prévu pour la visite d'un lieu animé tel un musée par exemple.

Tous les éléments communs dans les différentes figures portent les mêmes références.

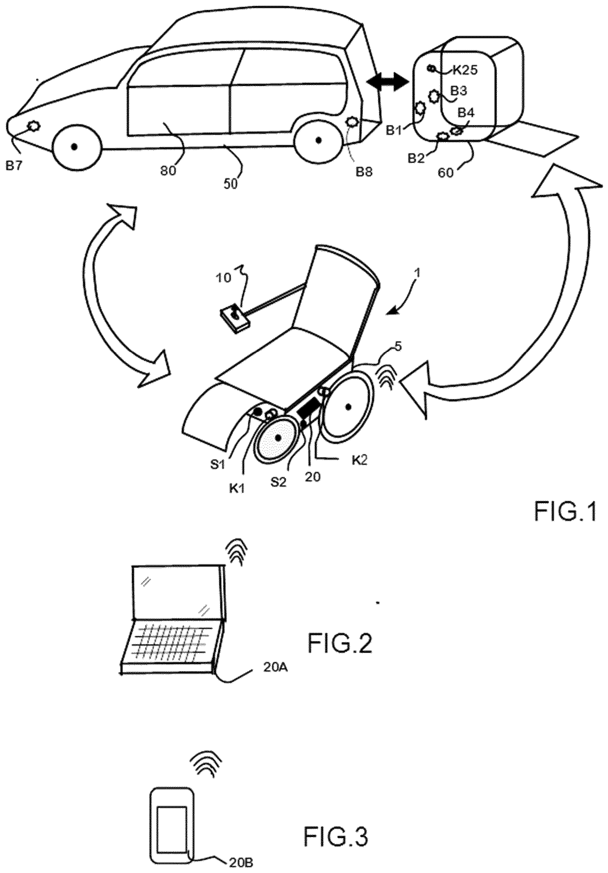

A la figure 1, la référence 1 indique l'appareillage conforme à l'invention se présentant sous la forme d'un fauteuil roulant. A ce fauteuil roulant est rattaché un dispositif de locomotion formé d'un moteur électrique, non montré sur la figure, dissimulé dans un caisson 5. Ce moteur est prévu pour entraîner, entre autres, les roues dont est muni le fauteuil. Un boîtier de commande 10 fixé sur un accoudoir du fauteuil est destiné notamment à la manœuvre de l'appareillage.

Différents dispositifs de captage sont rattachés à ce fauteuil 1 :
- des caméras : une caméra frontale K1, une caméra arrière, non montrée sur la figure, des caméras latérales dont seule la caméra K2 est visible. Ces caméras permettent, entre autres, de visualiser et/ou détecter des obstacles qui pourraient entraver les déplacements du fauteuil roulant 1.
- des capteurs ultra-sons, un capteur frontal S1, un capteur arrière non visible et des capteurs latéraux dont seul le capteur S2 est visible. Grâce à ces capteurs, il est possible de détecter la présence et de déterminer la distance d'obstacles qui les séparent de l'appareillage 1.

Les informations fournies par ces dispositifs de captage sont traitées par un dispositif de commande formé d'un dispositif de commande interne 20 et d'au moins un dispositif de commande annexe 20A ou 20B qui sont montrés aux figures 2 et 3 respectivement. Ces dispositifs de commande interne et annexes sont reliés entre eux par une liaison sans fil du type Bluetooth ou similaire (Wifi). De préférence, le dispositif de commande interne est constitué essentiellement par un ordinateur de type PC. Les dispositifs annexes sont formés soit par un ordinateur de type tablette informatique 20A (figure 2), soit tout simplement par un téléphone intelligent 20B connu sous le nom de smartphone (figure 3). Grâce à ces dispositifs de commande annexes, il est possible de télécharger des programmes qui définissent le comportement des moyens de gestion des dispositifs de commande de l'appareillage de l'invention et de s'adapter à différentes circonstances ; par exemple, pour la visite d'un musée selon une certaine trajectoire dite fixe. L'invention s'applique aussi aux trajectoires libres, c'est-à-dire que cette trajectoire dépend de la volonté de la personne handicapée.

Il est alors possible, en exécutant des programmes au moyen de ce dispositif de commande 20, d'apporter des facilités aux personnes handicapées pour l'aider dans l'utilisation d'un véhicule routier. C'est ce qui est montré à la figure 1.

Par l'invention, une personne handicapée peut donc utiliser un véhicule routier 50 d'une manière autonome. Un porte-appareillage 60 est prévu pour faciliter l'accès du fauteuil 1 dans le coffre du véhicule 50, en utilisant le programme dédié.

A cet effet, le porte-appareillage 60 est muni de caméras : une caméra intérieure K25 et une caméra extérieure (non visible), de balises B1, B2, B3 et B4 qui permettent de guider le fauteuil 1 dans le porte fauteuil 60.

Le préalable pour que la mise en œuvre du processus d'accès au véhicule 50 se déroule convenablement, est que le véhicule soit garé dans de bonnes conditions. Pour cela, il est prévu sur le pourtour du véhicule 50 une pluralité de balises dont seules les balises B7 et B8 sont montrées. Ces balises sont utiles pour obtenir un stationnement satisfaisant dans un emplacement qui peut être signalé par un serveur dédié à cette recherche d'emplacement disponible.

Le processus se déroule alors de la manière suivante :
On part de la situation dans laquelle la personne handicapée est dans sa voiture 50. L'appareillage constitué dans cet exemple par un fauteuil roulant 1 est disposé sur le porte-fauteuil 60 qui est donc placé dans le coffre du véhicule 50.

Une première phase consiste à la sortie du porte-fauteuil 60 qui va se placer au niveau du sol de sorte que le fauteuil 1 puisse se déplacer sur la chaussée.

Une deuxième phase va consister au déplacement du fauteuil au niveau de la portière 80 du véhicule 50. La personne handicapée va alors pouvoir s'installer sans trop de peine dans l'appareillage 1. Une fois la personne installée, une troisième phase va se dérouler. Cette phase va consister à ranger le porte-fauteuil 60 dans la malle du véhicule et fermer le véhicule.

Lorsque la personne handicapée veut alors rejoindre son véhicule, les phases d'opération inverses vont se dérouler.

Selon une phase d'installation, le fauteuil 1 va s'approcher du véhicule 50, la portière 80 va s'ouvrir de façon à permettre l'accès à la personne handicapée de s'installer au poste de conduite. Puis la malle va s'ouvrir de sorte que le porte-appareillage 60 puisse sortir et enfin l'appareillage va se placer sur le porte appareillage qui va s'engouffrer dans la malle du véhicule 50 qui va alors se refermer. La personne handicapée peut alors prendre possession de la conduite de son véhicule 50.

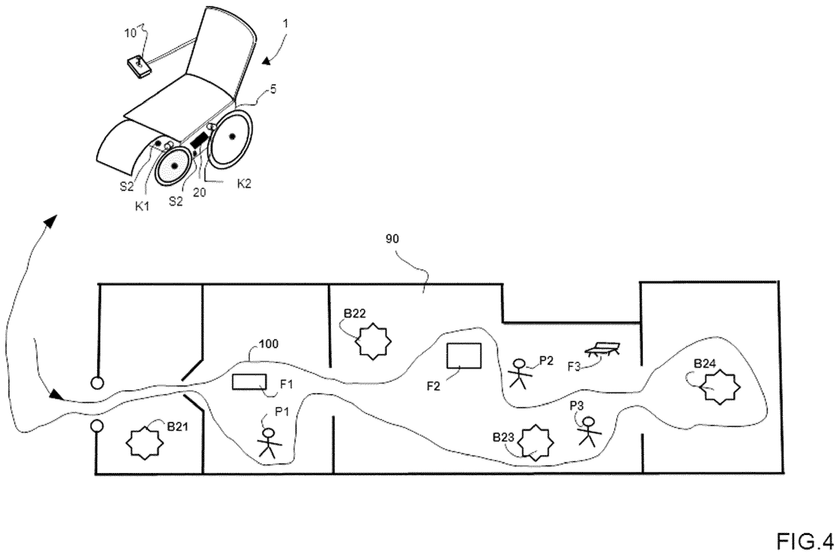

La figure 4 est relative à un système de guidage impliquant un appareillage conforme à l'invention. Il s'agit de permettre la visite d'un lieu animé, un musée par exemple, pour une personne handicapée. Pour entreprendre cette visite la personne handicapée doit télécharger le programme relatif à cette visite. Pour cela, le musée dont le plan 90 est montré à cette figure 4 est équipé de balises B21, B22, B23 et B24. Ces balises sont affectées à des points du musée pour fournir des commentaires sur les objets proches d'elles. Ces musées sont souvent parcourus par des visiteurs qui se comportent comme des obstacles mobiles P1, P2, P3 qu'il faut éviter et qui peuvent être détectés par les différents dispositifs de captage déjà mentionnés. D'autres obstacles qui sont fixes F1, F2, F3 doivent être aussi évités.

Ainsi, l'appareillage 1 a les moyens qui évitent tous ces obstacles en suivant une trajectoire 100 adaptée à la visite du musée

L'invention couvre aussi les programmes permettant d'utiliser le système ou l'appareillage de l'invention pour des applications diverses.

## Revendications

1. Appareillage mobile (1) pour handicapés moteurs, appareillage formé :
- d'un dispositif de locomotion pour se déplacer selon une trajectoire (100) libre ou fixe,
- d'un dispositif de commande (20) pour agir notamment sur le dispositif de locomotion,
- de dispositifs de captage (K1, K2,S1, S2) prévus pour détecter des obstacles pouvant se présenter dans la trajectoire (100) dudit appareillage,
**caractérisé en ce que** le dispositif de commande comporte des moyens de gestion de programmes de fonctionnement agissant sur ledit dispositif de commande afin de réaliser un guidage approprié.

2. Appareillage mobile pour handicapés moteurs selon la revendication 1 **caractérisé en ce que** certains desdits dispositifs de captage sont destinés à capter des informations de balises de repérage (B1, B2).

3. Appareillage mobile pour handicapés moteurs selon les revendications 1 ou 2 **caractérisé en ce que** les dispositifs de captage (K1, K2, S1, S2) sont, en totalité ou en partie, des caméras ou des capteurs ultrasons.

4. Système de guidage impliquant un appareillage selon les revendications 1 ou 2 ou 3, **caractérisé en ce qu'**il comporte :
- un véhicule automobile (50),
- un dispositif porte-appareillage (60) pour transférer ledit appareillage (1) au sein dudit véhicule (50)
et **en ce qu'**un programme de fonctionnement est prévu :
- pour présenter ledit appareillage dans ledit dispositif porte-appareillage,
- pour amener ledit appareillage vers la portière dudit véhicule automobile.

5. Système de guidage selon la revendication 4 **caractérisé en ce qu'**un programme de fonctionnement est prévu, entre autres, pour déterminer un emplacement de parking pour le véhicule.

6. Système de guidage impliquant un appareillage selon les revendications 1 ou 2 ou 3, destiné à effectuer un parcours selon une trajectoire (100) dans un site **caractérisé en ce que** des balises (B21, B22, B23, B24) sont prévues pour jalonner ledit parcours.

7. Système de guidage selon la revendication 6 **caractérisé en ce que** certains desdits moyens de captage coopèrent pour gérer l'évitement d'obstacles fixes ou mouvants.

8. Système de guidage impliquant un appareillage selon l'une des revendications 4 à 7 **caractérisé en ce que** le dispositif de commande (20) coopère avec au moins un dispositif de commande annexe (20A, 20B) destiné à gérer le téléchargement de programmes pour le fonctionnement de l'appareillage.

9. Système de guidage impliquant un appareillage selon la revendication 8 **caractérisé en ce que** le dispositif de commande annexe (20A) est constitué par une tablette informatique.

10. Système de guidage impliquant un appareillage selon la revendication 8 **caractérisé en ce que** le dispositif de commande annexe (20B) est constitué par un téléphone intelligent.
